(19) Europäisches Patentamt
European Patent Office
Office européen des brevets

(11) Veröffentlichungsnummer: **0 051 197**
**A1**

(12) # EUROPÄISCHE PATENTANMELDUNG

(21) Anmeldenummer: **81108488.8**

(22) Anmeldetag: **19.10.81**

(51) Int. Cl.³: **C 08 F 20/44**
C 08 F 2/06

(30) Priorität: **30.10.80 DE 3040969**

(43) Veröffentlichungstag der Anmeldung:
**12.05.82 Patentblatt 82/19**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Korte, Siegfried, Dr.**
**Bamberger Strasse 6**
**D-5090 Leverkusen 1(DE)**

(72) Erfinder: **Neukam, Theo, Dr.**
**Rubensstrasse 14**
**D-4047 Dormagen(DE)**

(72) Erfinder: **Süling, Carlhans, Dr.**
**Carl-Leverkus-Strasse 10**
**D-5068 Odenthal(DE)**

(54) **Verfahren zur Herstellung von Acrylnitril enthaltenden Polymeren.**

(57) Gut färbbare Acrylnitrilpolymere und -copolymere ohne Verwendung sulfonsäuregruppenhaltiger Comonomere werden durch Polymerisation bei Temperaturen von 0 bis 60°C in einem aliphatischen Kohlenwasserstoff mit einem Siedepunkt zwischen −10 und +80°C oder in Gemischen von aliphatischen Kohlenwasserstoffen mit Siedebereichen zwischen −10 und +80°C, unter Verwendung eines Startersystems, das aus 0,1 bis 8,0 Mol-% Schwefeldioxid, 0,1 bis 2,0 Mol-% eines im Reaktionsmedium löslichen Hydroperoxids sowie 0,01 bis 1,0 Mol-% einer im Reaktionssystem löslichen Säure besteht (jeweils bezogen auf die eingesetzte Monomermenge), dadurch erhalten, daß man kontinuierlich polymerisiert und eine mittlere Verweilzeit von 10 Minuten bis 2 Stunden einhält.

EP 0 051 197 A1

BAYER AKTIENGESELLSCHAFT 5090 Leverkusen, Bayerwerk
Zentralbereich
Patente, Marken und Lizenzen Jo/kl-c

# Verfahren zur Herstellung von Acrylnitril enthaltenden Polymeren

Die Erfindung betrifft ein Verfahren zur Herstellung von Polyacrylnitril und von überwiegend Acrylnitril enthaltenden Copolymeren durch Polymerisation in aliphatischen Kohlenwasserstoffen in Gegenwart eines Redoxkatalysators.

Aus der DE-OS 28 33 143 ist bekannt, daß sich mit basischen Farbstoffen anfärbbare Acrylnitrilpolymere unter Verzicht auf sulfonsäuregruppenhaltigen Comonomeren dadurch erhalten lassen, daß man Acrylnitril alleine oder in Gegenwart von weiteren copolymerisationsfähigen, sulfonsäuregruppenfreien Monomeren in aliphatischen Kohlenwasserstoffen polymerisiert. Das bekannte Verfahren kann diskontinuierlich oder kontinuierlich durchgeführt werden, wobei hohe Verweilzeiten eingehalten werden.

Obwohl die so erhaltenen Produkte einen überraschend hohen Gehalt an mit basischen Farbstoffen färbbaren Gruppen aufweisen, hat sich gezeigt, daß die aus den Polymeren gewonnenen Formkörper, beispielsweise Fasern und Fäden,

zu textilen Flächengebilden verarbeitet, noch nicht allen Anforderungen genügen, weil die Färbungen heller Nuancen infolge der hohen Färbegeschwindigkeit des Fasermaterials selbst beim Einsatz kationischer Farbstoffe mit geringer Aufziehgeschwindigkeit häufig unegal und streifig ausfallen.

Es wurde nun gefunden, daß sich diese Nachteile durch eine Verbesserung des Polymerisationsverfahrens beheben lassen.

Die Erfindung betrifft ein Verfahren zur Herstellung von Polyacrylnitril und überwiegend Acrylnitril enthaltenden Copolymeren, durch Polymerisation von Acrylnitril alleine oder mit bis zu 30 Gew.-% mindestens eines ethylenisch ungesättigten, sulfonsäuregruppenfreien Comonomeren, bei Temperaturen von 0 bis 60°C in einem aliphatischen Kohlenwasserstoff mit einem Siedepunkt zwischen -10 und 80°C, oder in Gemischen von aliphatischen Kohlenwasserstoffen mit Siedebereichen zwischen -10 und 80°C, unter Verwendung eines Startersystems, das aus 0,1 bis 8,0 Mol-% Schwefeldioxid, 0,1 bis 2,0 Mol-% eines im Reaktionsmedium löslichen Hydroperoxids sowie 0,01 bis 1,0 Mol-% einer im Reaktionssystem löslichen Säure besteht (jeweils bezogen auf die eingesetzte Monomermenge), dadurch gekennzeichnet, daß man kontinuierlich polymerisiert und eine mittlere Verweilzeit von 10 Minuten bis 2 Stunden einhält.

Vorzugsweise beträgt die Verweilzeit 20 bis 70 Minuten.

Ein weiterer überraschender Vorteil des erfindungsgemäßen Verfahrens besteht darin, daß bei kurzen Verweilzeiten bei der Polymerisation ein gut filtrierbares Korn anfällt, das eine problemlose Weiterverarbeitung, z.B. unmittelbares Auflösen des noch mit Fällmittel behafteten Breies in geeigneten Solventien garantiert. Zwar lassen sich, wie in der DE-AS 1 595 022 beschrieben, auch im wäßrigen Medium hohe Raum-Zeit-Ausbeuten erzielen, doch ist hier der Verweilzeit eine untere Grenze bei 45 Minuten gesetzt, da in diesem Bereich bereits schmierige, schwer filtrierbare Substrate anfallen. Dieser Einschränkung unterliegt das erfindungsgemäße Verfahren nicht, es findet vielmehr auch unterhalb von 45 Minuten Verweilzeit bei vergleichsweise geringen Umsätzen ein gleichmäßiger Einbau an Sulfonsäuregruppen statt, der zu höheren Lichtechtheiten bei gefärbten Artikeln führt.

Gegenüber dem Verfahren der Massepolymerisation nach DE-AS 2 120 337 zeichnet sich das erfindungsgemäße Verfahren durch leichte Beherrschbarkeit der Reaktionsführung, wie Ableiten der entstehenden Polymerisationswärme aus.

Nach dem erfindungsgemäßen Verfahren werden Homo- und Copolymere des Acrylnitrils erhalten, wie sie in der

DE-OS 28 33 143, Seite 7, letzter Absatz, beschrieben sind, jedoch ohne deren Neigung zum unegalen Färben.

Gegenüber diesem früher beschriebenen Verfahren zeichnet sich das nunmehr verbesserte Verfahren zusätzlich durch eine größere Raum/Zeit-Ausbeute aus.

Geeignete Comonomere im Rahmen der Erfindung sind alle mit Acrylnitril copolymerisationsfähigen, ethylenisch ungesättigten Verbindungen, die in den als Fällmedium benutzten aliphatischen Kohlenwasserstoffen bzw. in deren Gemischen mit Acrylnitril löslich sind. Besonders geeignete Comonomere sind die Ester der Acryl- und Methacrylsäure, die Vinylester aliphatischer Carbonsäuren, Styrol und durch Alkylgruppen substituiertes Styrol, wie z.B. α-Methylstyrol oder 4-tert.-Butylstyrol, sowie Maleinsäureanhydrid und N-alkylsubstituierte Maleinsäureimide. Der Vorteil des erfindungsgemäßen Verfahrens äußert sich unter anderem darin, daß auch Comonomere, wie Maleinsäureanhydrid und Maleinsäureimide der allgemeinen Formel

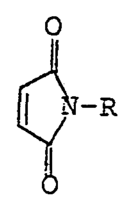 ,

in der R einen linearen, verzweigten oder cyclischen Alkylrest mit bis zu 12 C-Atomen, vorzugsweise einen Methyl- oder Cyclohexylrest, darstellt, eingesetzt werden können.

Diese Monomeren sind nach anderen Verfahrensweisen, z.B. durch Polymerisation in wäßrigen Medien, nur ungenügend zur Copolymerisation mit Acrylnitril befähigt, insbesondere dann, wenn hohe Einbauquoten gefordert sind. Außerdem entstehen bei Verwendung dieser speziellen Comonomeren unter Polymerisationsbedingungen, die hydrolytische Prozesse begünstigen, carboxylgruppenhaltige Produkte, die aufgrund ihres schlechten Rohtones und ihrer ungenügenden Thermostabilität für viele Anwendungen unbrauchbar sind.

Maleinsäureanhydrid, aber auch die genannten Maleinsäureimide, können erfindungsgemäß auch in Kombination mit Styrol in Molverhältnissen von 1:1 bis 1:4 mit Acrylnitril copolymerisiert werden.

Die aufgeführten, mit Acrylnitril copolymerisierbaren Monomeren sind in Anteilen bis zu 30 Gew.-% (bezogen auf die Gesamtmenge der eingesetzten Monomermischung) einsetzbar. Für manche Einsatzgebiete sind Polymere mit Comonomeranteilen bis zu 15 Gew.-% bevorzugt.

Das erfindungsgemäße Verfahren bedient sich der Technik der Fällungspolymerisation, d.h. die entstehenden polymeren Materialien scheiden sich im Verlauf der Umsetzung als feinteilige, gut filtrierbare Partikel aus dem als Fällmedium dienenden Gemisch von aliphatischem Kohlenwasserstoff und eingesetzten Monomeren aus. Je nach

den erzielbaren Umsätzen, die im Bereich von 30 bis 85 Gew.-% variieren können, vorzugsweise aber Werte von 40 bis 65 Gew.-% erreichen, ist das Verhältnis von eingesetzter Monomermenge und Menge an aliphatischen Kohlenwasserstoffen einzustellen. Der Anteil der eingesetzten Monomeren im reagierenden System beträgt 7 bis 35 Gew.-%, vorzugsweise 20 bis 32 Gew.-%.

Die als Reaktionsmedium und als Fällmittel verwendeten aliphatischen Kohlenwasserstoffe können als reine Stoffe mit definierten Siedepunkten zwischen -10 und 80°C oder in Form von Gemischen, so wie sie nach den üblichen Verfahren der Raffinerietechnik anfallen, mit Siedebereichen zwischen -10 und 80°C, eingesetzt werden. Bevorzugt zu nennen sind z.B. Butan, Pentan und Cyclohexan sowie eine Petrolethertype mit einem Siedebereich von 40 bis 80°C und deren Mischungen.

Ein wesentliches Merkmal des erfindungsgemäßen Verfahrens ist die Verwendung eines Redoxkatalysatorsystems, bestehend aus Schwefeldioxid, einem Hydroperoxid und einer systemlöslichen Säure, das die Durchführung der Polymerisation bei Temperaturen im Bereich von 0 bis 60°C ermöglicht.

Das Schwefeldioxid kann sowohl in flüssiger als auch in gasförmiger Form in Mengen von 0,1 bis 8,0 Mol-%, bezogen auf den Anteil der eingesetzten Monomeren, dem Polymerisationsansatz zugeführt werden.

Als im Reaktionsmedium lösliche Hydroperoxide kommen vorzugsweise Hydroperoxide mit sekundären und tertiären Alkylgruppen sowie mit Aralkylgruppen in Mengen von 0,1 bis 2 Mol-% infrage. Diese sind z.B. durch Alkylierung von Wasserstoffperoxid mit geeigneten Alkylhalogeniden, Dialkylsulfaten oder Alkoholen in Gegenwart starker Säuren, bzw. durch Anlagerung von Wasserstoffperoxid an Olefine erhältlich. Vorzugsweise serden tert.-Butylhydroperoxid und Cumolhydroperoxid verwendet. Der Polymerisationsverlauf und die Eigenschaften der entstehenden Polymeren werden entscheidend durch das Einsatzverhältnis der beiden Redoxkomponenten $SO_2$/Hydroperoxid geprägt. Als vorteilhaft hat sich die Einstellung eines molaren Verhältnisses von 1:1 bis 6:1 erwiesen.

Weiterhin wird mit den beiden Redoxpartnern $SO_2$/Hydroperoxid eine systemlösliche Säure eingesetzt. Dies sind insbesondere organische Säuren in Mengen von 0,01 bis 1,0 Mol-%, vorzugsweise teil- und perhalogenierte Carbonsäuren mit bis zu 10 C-Atomen. Unter diesen sind bevorzugt zu nennen Trichloressigsäure, Perchlorpropionsäure, Perchlorbuttersäure. Die Carbonsäuren wirken reglend auf den Initiierungs- und Molekülwachstumsprozeß bei der Polymerisation ein. Auf diese Weise wird eine zufriedenstellende Thermostabilität der erzeugten Polymerisate erzielt.

Die nach dem erfindungsgemäßen Verfahren anfallenden Fäl-

lungspolymerisate lassen sich nach Filtration, Wäsche und Trocknung als feinteilige Pulver mit Schüttdichten von 0,1 bis 0,5 $g/cm^3$ isolieren.

Es ist aber auch möglich, das Polymerisat direkt in eine zur Formgebung geeignete Lösung zu überführen, derart, daß man den noch aliphatischen Kohlenwasserstoff und nicht umgesetztes Monomer enthaltenden feuchten Filterkuchen gegebenenfalls unter Druck einer ein- oder mehrstufigen Wäsche mit einer niedrigsiedenden, das Polymere nicht lösenden organischen Waschflüssigkeit unterwirft, den so vorbehandelten Filterkuchen direkt in ein geeignetes Lösungsmittel für das Polymere einträgt, in einem Verdampfer die mit dem Polymerisat zugeführte Waschflüssigkeit sowie geringe Restanteile an Monomeren abtrennt und dabei gleichzeitig die Lösung auf eine für die Formgebung geeignete Konzentration und Viskosität einstellt. Als Verdampfer eignen sich prinzipiell die nach dem Stand der Technik bekannten Typen, wie z.B. Dünnschichtverdampfer, Fallfilmverdampfer oder Eindampfschnecke.

Nach dieser Methode kann im Vergleich zu herkömmlichen Verfahren auf eine energieintensive Trockenstufe und auf die Zwischenlagerung von Trockenpolymerisat verzichtet werden. Das erfindungsgemäße Verfahren bietet unabhängig von der Aufarbeitungstechnik eine einfachere Möglichkeit, alle Komponenten des Systems zu recyclisieren.

Die in den Beispielen angeführten Grenzviskositätszahlen $[\eta]$ wurden in 0,5 gew.-%iger Dimethylformamidlösung bei 25°C gemessen und sind in dl/g angegeben. Zur Definition der Grenzviskositätszahl siehe H.G. Elias, Makromoleküle, Hütling und Wept-Verlag, Basel, S. 265.

Beispiel 1

In einem Reaktor mit einem Volumen von 610 ml werden 292,8 g Petrolether (K.p. 40 bis 80°C), 0,25 g Trichloressigsäure, 85,0 g Acrylnitril (ACN), 6,5 g Acrylsäuremethylester (ACME) und 0,61 g t.-Butylhydroperoxid (t-BHP) 80 %ig vorgelegt. Bei 37°C wird unter Stickstoff und Rühren eine Lösung von 12,2 g ACN, 1,5 g $SO_2$ (kondensiert) in 18,3 g Petrolether zugegeben. Anschließend werden pro Stunde (entspricht je einer Verweilzeit) je 305 ml der nachstehend beschriebenen Lösungen II und III zugepumpt. Nach 3 Verweilzeiteinheiten ist der Ansatz im Gleichgewicht. Die stündlich gewonnene Feststoffmenge beträgt 73 g (68 % der Theorie) entsprechend einer Raumzeitausbeute von 120 g $l^{-1}h^{-1}$.

Lösung II:
1225,0 g Petrolether, 396,0 g ACN, 29,5 g ACME, 1,5 g Trichloressigsäure, 16,0 g $SO_2$ (kondensiert).

Lösung III:
1225,0 g Petrolether, 396,0 g ACN, 29,5 g ACME und 5,0 g t-BHP 80 %ig.

Das gewonnene Polymerisat hat einen $[\eta_i]$ Wert von 1,5, einen S-Gehalt in Gew.-% von 0,22 und einen Estergehalt von 5,8 Gew.-%. Die Verweilzeit beträgt 1 Stunde.

Beispiel 2

Die Durchführung erfolgte analog Beispiel 1, wobei die Lösungen II und III in einer Menge von je 462 ml pro Stunde zudosiert wurden. Die Verweilzeit beträgt 0,66 Stunden, der Umsatz 50 Gew.-% und die Ausbeute 81 g. Das Polymerisat hat einen $[\eta]$-Wert von 1,3, einen S-Gehalt von 0,26 Gew.-% und einen Acrylsäuremethylestergehalt von 5,8 Gew.-%.

Beispiel 3

Die Durchführung erfolgte Analog Beispiel 1, wobei die Lösungen II und III in einer Menge von je 610 ml pro Stunde zudosiert wurden.

Die Verweilzeit betrug 0,5 Stunden, der Umsatz 30 Gew.-% und die Ausbeute 64 g. Das Polymerisat hat einen $[\eta]$-Wert von 1,37, einen S-Gehalt von 0,23 Gew.-% und Acrylsäuremethylestergehalt von 5,7 Gew.-%.

Beispiel 4

Die Durchführung erfolgte analog Beispiel 1. Der Reaktor hatte ein Reaktionsvolumen von 1000 ml. Vorlage, Startlösung, Lösung II und Lösung III hatten folgende Zusammensetzungen:

| | | A | B |
|---|---|---|---|
| Vorlage: | Petrolether (40-80°C) | 500 g | 500 g |
| | ACN | 159 g | 157 g |
| | N-Cyclohexylmaleinimid (N-CMI) | 2 g | 4 g |
| | t-BHP 80 %ig | 0,8 g | 0,8 g |
| | Trichloressigsäure | 0,25 g | 0,25 g |
| Startlösung: | Petrolether (40-80°C) | 10 g | 10 g |
| | ACN | 10 g | 10 g |
| | $SO_2$ (kondensiert) | 3,45 g | 3,45 g |
| Lösung II: | Petrolether (40-80°C) | 2600 g | 2610 g |
| | ACN | 775 g | 703 g |
| | N-CMI | 72 g | 144 g |
| | Trichloressigsäure | 0,6 g | 0,6 g |
| | $SO_2$ (kondensiert) | 34,5 g | 34,5 g |
| Lösung III: | Petrolether (40-80°C) | 2530 g | 2530 g |
| | ACN | 890 g | 890 g |
| | t-BHP 80 %ig | 8 g | 8 g |

Pro Stunde wurden von Lösung II und Lösung III je 1000 ml zudosiert.

Nach Versuch A erhält man bei einer Verweilzeit von

0,5 Stunden einen Umsatz von 37,1 Gew.-% und eine Ausbeute von 129 g. Das Polymerisat hat einen $[\eta]$-Wert von 1,12 einen S-Gehalt von 0,51 Gew.-%, einen Gehalt an Acrylnitril von 93,8 Gew.-% und von N-CMI von 4,9 Gew.-%.

Das Produkt nach Versuch B hatte eine Verweilzeit von 0,5 Stunden einen Umsatz von 42,9 Gew.-% und eine Ausbeute von 149 g. Das Polymer hatte einen $[\eta]$-Wert von 1,33, einen S-Gehalt von 0,46 Gew.-% und einen Gehalt an Acrylnitril von 90,1 Gew.-% und von N-CMI von 8,5 Gew.-%.

Beispiel 5

Die Durchführung erfolgte analog Beispiel 1, wobei die Lösungen II und III mit 76,25 ml pro Stunde zudosiert wurden.

Die Verweilzeit beträgt 4 Stunden, man erhält eine Ausbeute von 23,6 g bei einem Umsatz von 88 %. Das Polymerisat hat einen $[\eta]$-Wert von 1,45, einen S-Gehalt von 0,19 Gew.-% und einen Acrylsäuremethylestergehalt von 5,6 Gew.-%.

Die erhaltenen Polymerisate wurden nach üblichen Methoden in eine 28 gew.-%ige Dimethylformamidspinnlösung überführt. Nach dem Verspinnen und Verstrecken im Verhältnis 1 zu 4 erfolgte einbadiges Färben mit den Handelsfarbstoffen der Formel A (rot) und B (blau), wobei

folgende Färbebedingungen eingehalten wurden: Flottenverhältnis 1 : 23, pH-Wert 4,5, Temperatur 98°C und Zusatz von 0,5 g pro Liter eines handelsüblichen Egalisierungsmittels.

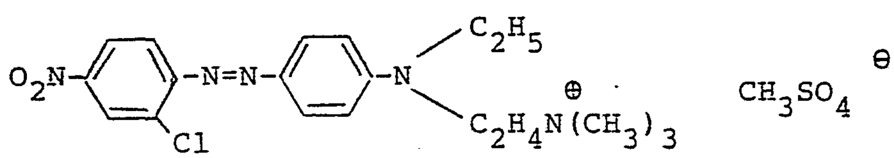

(Farbstoff A)

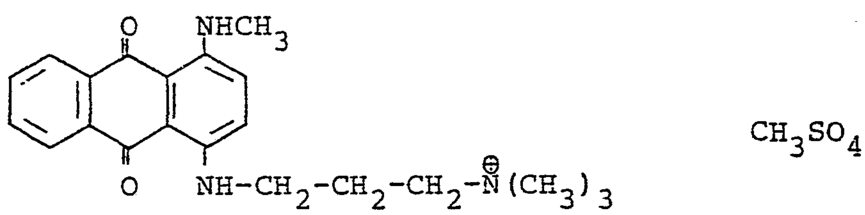

(Farbstoff B)

Der Farbstoffwert wurde folgendermaßen bestimmt und definiert: ca. 10 mg gefärbtes Fasermaterial wird in 100 ml absolutem DMF gelöst und eine Probe davon in eine 1 ml-Küvette (Schichtdicke 1 cm) gegeben. Die Messung der Extinktion erfolgte in einem Zweistrahlgerät der Firma Perkin-Elmer, PE 550 S. Der Quotient Extinktion/Fasereinwaage ist als Farbstoffwert definiert und in den Tabellen 1a und 1b angegeben.

Tabelle 1a Farbstoff A, Filter 578 nm

| Beispiel | Farbstoffwert (Ext. · $g^{-1}$) | Verweilzeit (h) |
|---|---|---|
| 1 | 7,52 | 1 |
| 2 | 13,20 | 0,66 |
| 3 | 9,03 | 0,5 |
| 4 A | 9,41 | 0,5 |
| 4 B | 8,73 | 0,5 |
| 5 | 6,64 | 4 |

Tabelle 1b Farbstoff B, Filter 492 nm

| Beispiel | Farbstoffwert (Ext. · $g^{-1}$) | Verweilzeit (h) |
|---|---|---|
| 1 | 2,40 | 1 |
| 2 | 3,56 | 0,66 |
| 3 | 2,83 | 0,5 |
| 4 A | 2,61 | 0,5 |
| 4 B | 2,53 | o,5 |
| 5 | 2,32 | 4 |

Auf den vorstehenden Tabellen ist zu ersehen, daß die Farbstoffwerte pro g für die erfindungsgemäßen Beispiele 1 bis 4 besser sind als für den Vergleich 5. Der Vergleich 5 zeigt außerdem pro Meter Filament 2 bis 3 Hell-Dunkel-Stellen, während das übrige Material völlig gleichmäßig angefärbt ist.

Patentansprüche

1. Verfahren zur Herstellung von Polyacrylnitril und überwiegend Acrylnitril enthaltenden Copolymeren durch Polymerisation von Acrylnitril alleine oder mit bis zu 30 Gew.-% mindestens eines ethylenisch ungesättigten, sulfonsäuregruppenfreien Comonomeren bei Temperaturen von 0 bis 60°C in einem aliphatischen Kohlenwasserstoff mit einem Siedepunkt zwischen -10 und +80°C oder in Gemischen von aliphatischen Kohlenwasserstoffen mit Siedebereichen zwischen -10 und +80°C, unter Verwendung eines Startersystems, das aus 0,1 bis 8,0 Mol-% Schwefeldioxid, 0,1 bis 2,0 Mol-% eines im Reaktionsmedium löslichen Hydroperoxids sowie 0,01 bis 1,0 Mol-% einer im Reaktionssystem löslichen Säure besteht (jeweils bezogen auf die eingesetzte Monomermenge), dadurch gekennzeichnet, daß man kontinuierlich polymerisiert und eine mittlere Verweilzeit von 10 Minuten bis 2 Stunden einhält.

2. Verfahren nach Anspruch 1, dadurch gekennzeichnet, daß man eine mittlere Verweilzeit von 20 bis 70 Minuten einhält.

3. Verfahren nach Anspruch 1, dadurch gekennzeichnet, daß als ethylenisch ungesättigte Comonomere (Meth) Acrylsäurealkylester, Vinylester aliphatischer Carbonsäuren, Styrol oder durch Alkylgruppen substituiertes Styrol Maleinsäureanhydrid oder N-Alkyl substituierte Maleinsäureimide copolymerisiert werden.

4. Verfahren nach Anspruch 1, dadurch gekennzeichnet, daß als Comonomere Maleinsäureanhydrid oder N-Alkyl substituierte Maleinsäureimide in Kombination mit Styrol im molaren Verhältnis von 1 : 1 bis 1 : 4 eingesetzt werden.

5. Verfahren nach Anspruch 1, dadurch gekennzeichnet, daß die ungesättigten Comonomeren in Mengen bis zu 15 Gew.-% bezogen auf eingesetztes Acrylnitril copolymerisiert werden.

6. Verfahren nach Anspruch 1, dadurch gekennzeichnet, daß als Hydroperoxide tert.-Butylhydroperoxid oder Cumolhydroperoxid verwendet werden.

7. Verfahren nach Anspruch 1, dadurch gekennzeichnet, daß als System lösliche Säure teil- oder perhalogenierte Carbonsäuren mit bis zu 10 Kohlenstoffatomen verwendet werden.

8. Verfahren nach Anspruch 1, dadurch gekennzeichnet, daß als Lösungsmittel Butan, Pentan, Cyclohexan und Petroletherfraktionen mit einem Siedebereich von 40 bis 80°C eingesetzt werden.

**0051197**

Europäisches Patentamt

# EUROPÄISCHER RECHERCHENBERICHT

Nummer der Anmeldung
EP 81 10 8488

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D/Y | EP - A - 0 008 020 (BAYER)<br>* Patentansprüche 6-11 *<br>& DE - A - 2 833 143 | 1,3-8 |
| Y | DE - A - 1 264 065 (KODAK)<br>* Patentanspruch; Seite 9, Spalte 1, Zeilen 30-34 * | 1,2 |

KLASSIFIKATION DER ANMELDUNG (Int. Cl.³)

C 08 F 20/44
2/06

RECHERCHIERTE SACHGEBIETE (Int. Cl.³)

C 08 F 20/42
20/44
120/42
120/44
220/42
220/44

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 19.02.1982 | CAUWENBERG |